# EUROPÄISCHE PATENTANMELDUNG

(11) **EP 1 642 704 A2**
(43) Veröffentlichungstag der Anmeldung: **05.04.2006**
(21) Anmeldenummer: 05020520.2
(22) Anmeldetag: 20.09.2005
(51) Int. Cl.: B29C 73/16, B60C 29/06, B60S 5/04

(54) **Abdichtvorrichtung**

(30) Priorität: 01.10.2004 DE 102004048002
(71) Anmelder: Kant, Arne, 80469 München (DE); Zeuner, Manfred, 80805 München (DE); Samson, Rainer, 48147 Münster (DE); Wong, Paul W. K., Hong Kong (CN)
(72) Erfinder: Kant, Arne, 80469 München (DE); Zeuner, Manfred, 80805 München (DE); Samson, Rainer, 48147 Münster (DE); Wong, Paul W. K., Hong Kong (CN)
(74) Vertreter: Laufhütte, Dieter

(57) **Zusammenfassung**

Die Erfindung betrifft eine Vorrichtung zum Abdichten aufblasbarer Gegenstände, insbesondere Reifen, mit einer Gasdruckquelle, einem Druckschlauch zum Verbinden der Gasdruckquelle mit dem aufblasbaren Gegenstand und einem in einer Entnahmeeinheit enthaltenen Abdichtmittel, wobei der Druckschlauch gleichzeitig die das Abdichtmittel enthaltende Entnahmeeinheit bildet.

## Beschreibung

Die Erfindung betrifft eine Vorrichtung zum Abdichten aufblasbarer Gegenstände, insbesondere Reifen, nach dem Oberbegriff des Anspruchs 1.

Bereits aus der DE 196 52 546 A1 sind derartige Vorrichtungen bekannt, die dazu dienen, ein Leck in einem aufblasbaren Gegenstand, beispielsweise in einem zerstochenen oder während der Fahrt beschädigten Reifen, dadurch abzudichten, daß ein spezielles Abdichtmittel über das Reifenventil in den Reifen eingebracht und der Reifen anschließend zumindest auf einen Druck, bei dem er gefahren werden kann, aufgepumpt wird. Üblicherweise weist eine derartige Abdichtvorrichtung nach dem Stand der Technik eine Entnahmeeinheit auf, die einen ein Abdichtmittel enthaltenden Behälter umfaßt, der einen an eine Gasdruckquelle anschließbaren Gaseinlass und einen mit einem abzudichtenden Gegenstand koppelbaren Auslass aufweist, wobei der Gaseinlass und der -auslass über den Behälterinnenraum miteinander in Verbindung stehen.

Entnahmeeinheiten zur Handhabung von Flüssigkeiten sind aus einer Reihe weiterer Schriften bekannt, beispielsweise aus der US 5,584,411, der EP 0 557 913 A, der DE 44 37 981 A, der US 3,908,871 und der US 3,374,927.

Aus der EP 1 121 324 B1 ist eine Abdichtvorrichtung bekannt, die eine separate Entnahmeeinheit vorsieht und es dadurch ermöglicht, den Behälter auszuwechseln, wenn das Abdichtmittel verbraucht oder verfallen ist, ohne dass die gesamte Abdichtvorrichtung erneuert werden muß. Durch die entsprechende Koppelbarkeit einer getrennten Entnahmeeinheit kann die wiederverwendbare Entnahmeeinheit mit Behältern unterschiedlicher Größe verwendet werden und die erfindungsgemäße Abdichtvorrichtung kann somit an den jeweiligen aufblasbaren Gegenstand angepaßt werden. Allerdings umfaßt diese vorbekannte Entnahmeeinheit einen mit dem Abdichtmittel gefüllten eigenen Behälter der über entsprechende Schlauchstücke einerseits mit der Druckquelle und andererseits mit dem zum Abdichten aufblasbaren Gegenstand verbunden werden muß. Bei dieser bekannten Vorrichtung sind also eine Reihe von Bestandteilen der Gesamtvorrichtung vorzusehen, nämlich neben der Druckquelle auch die Entnahmeeinheit, ein das Dichtmittel enthaltender Behälter und Schlauchverbindungsstücke. Hierdurch ist ein vergleichsweise großer Raumbedarf zum Lagern der entsprechenden Abdichtvorrichtung beispielsweise im Kraftwagen, in welchen diese mitgeführt wird, vorzusehen.

Aufgabe der Erfindung ist es, eine Vorrichtung der eingangs genannten Art derart weiterzubilden, dass sie möglichst kompakt baut und aus möglichst wenig Einzelteilen besteht.

Die Lösung dieser Aufgabe ergibt sich aus der Kombination der Merkmale des Anspruchs 1.

Ausgehend von einer Vorrichtung zum Abdichten aufblasbarer Gegenstände, insbesondere Reifen, mit einer Gasdruckquelle, einem Druckschlauch zum Verbinden der Gasdruckquelle mit dem aufblasbaren Gegenstand und einem in einer Entnahmeeinheit enthaltenen Abdichtmittel, bildet hier der Druckschlauch gleichzeitig die das Abdichtmittel bildende Entnahmeeinheit. Damit wird eine Vorrichtung zur Verfügung gestellt, die im wesentlichen aus zwei Bestandteilen, nämlich der Gasdruckquelle einerseits und dem Druckschlauch, der gleichzeitig das Abdichtmittel enthält, andererseits gebildet ist. Eine derartige Vorrichtung kann sehr kompakt ausgebildet sein. Je nach Volumenbedarf für das Abdichtmittel können unterschiedlich lange bzw. unterschiedlich gefüllte Druckschläuche zur Verfügung gestellt werden. Zum anderen können die Druckschläuche für den Fall, dass das Abdichtmittel verbraucht oder verfallen ist erneuert werden, ohne dass die gesamte Abdichtvorrichtung erneuert werden muß. Es kann auch leicht zusätzlich zu den mit Abdichtmittel gefüllten Druckschläuchen noch ein handelsüblicher Druckschlauch der Vorrichtung beigegeben werden, der zu einer Verbindung mit dem aufblasbaren Gegenstand dient, um beispielsweise Luft nachzufüllen, ohne gleichzeitig ein Abdichtmittel in den aufblasbaren Gegenstand, beispielsweise den Reifen, zu füllen.

Bevorzugte Ausgestaltungen der Erfindung ergeben sich aus den an den Hauptanspruch anschließenden Unteransprüchen.

Demnach kann der Druckschlauch vorteilhaft über Anschlussstücke mit der Gasdruckquelle und dem aufblasbaren Gegenstand verbindbar sein.

Der Druckschlauch kann vor dem Anschlussstück, das mit dem aufblasbaren Gegenstand verbindbar ist, ein Rückschlagventil aufweisen. Dies verhindert im Fall des Aufpumpens ein ungewolltes Zurückströmen der komprimierten Luft, die mit dem Abdichtmittel in den aufblasbaren Gegenstand eingefüllt wurde.

In den Anschlussstücken sind jeweils den Schlauch verschließende Membranen enthalten, die bei Verwendung der Vorrichtung zum Abdichten geöffnet werden können. Zum Öffnen können sie beispielsweise durchstochen oder während des Aufschraubens des Anschlussstücks an die Druckquelle bzw. den aufblasbaren Gegenstand, wie den Reifen, durchtrennt werden. Zusätzlich können auf die Anschlussstücke des Druckschlauchs bei Bedarf Verschlusskappen aufsetzbar, beispielsweise aufsteckbar oder aufschraubbar, sein.

Um genügend Abdichtmittel aufnehmen zu können, kann der Druckschlauch in dem Bereich, in dem er das Abdichtmittel aufnimmt, einen erweiterten Querschnitt aufweisen.

Besonders vorteilhaft ist die Gasdruckquelle durch ein Gehäuse gebildet, das an seiner Mantelfläche eine Ausnehmung zur Aufnahme des auf das Gehäuse aufwikkelbaren Druckschlauches ausnimmt.

Vorteilhaft kann eine Seite des Gehäuses der Gasdruckquelle als Standfuß ausgebildet sein, während auf der gegenüberliegenden Seite ein Gasdruckanzeiger angeordnet ist.

Der Druckschlauch kann im aufgewickelten Zustand über das entsprechende Anschlussstück bereits mit der Gasdruckquelle verbunden sein.

Zusätzlich kann abgetrennt von der Ausnehmung zur Aufnahme des Druckschlauchs am Gehäusemantel eine Ausnehmung der Aufnahme eines aufwickelbaren elektrischen Verbindungskabels ausgenommen sein. Dieses elektrische Verbindungskabel dient dazu, den Gaskompressor mit einer Stromquelle, beispielsweise einer 12 V Batterie des Fahrzeugs zu verbinden.

Vorzugsweise weist der Druckschlauch in seinem mittleren Bereich einen vergleichsweise größeren Durchmesser auf. Hierdurch kann die notwendige Menge des Abdichtmittels aufgenommen werden. Um ein vollständigen Ausschieben des Dichtmittels zu vereinfachen, ist in dem Bereich des Druckschlauchs, der einen erweiterten Durchmesser aufweist, ein Membranschieber verschlieblich angeordnet. Es handelt sich hier also um eine dünnwandige Schieberkonstruktion, die aufgrund der Druckluft entlang der Wandung des Druckschlauchs verschoben wird. Gegen Ende des verdickten Teils kann vorteilhaft eine Vorrichtung, beispielsweise eine entsprechende Schneidvorrichtung, vorhanden sein, mittels der der Membranschieber aufgeschnitten bzw. durchstochen wird, um ein Durchtreten der Druckluft zu ermöglichen.

Eine weitere bevorzugte Ausgestaltung der Erfindung besteht darin, dass im Druckschlauch ein Kugelschieber beweglich angeordnet ist, der über die Druckluft das Abdichtmittel aus dem Druckschlauch herausdrückt. Am Ende des Schlauchs ist eine Aufnahmeausnehmung zur Aufnahme des Kugelschiebers ausgebildet, um hierdurch das Volumen des Druckschlauchs für die durchströmende Druckluft freizugeben.

Schließlich kann gemäß einer weiteren vorteilhaften Ausgestaltung der Erfindung der Druckschlauch spiralförmig - gegebenenfalls auch mehrlagig - gewunden sein. Hierdurch soll erreicht werden, dass sich das Abdichtmittel jeweils in Richtung der Schwerkraftrichtung sammeln kann und von der anströmenden Druckluft herausgedrückt wird.

Weitere Merkmale, Einzelheiten und Vorteile der Erfindung werden anhand eines in der Zeichnung dargestellten Ausführungsbeispiels näher erläutert. Es zeigen:
- Figur 1:: eine perspektivische Darstellung einer erfindungsgemäßen Vorrichtung zum Abdichten aufblasbarer Gegenstände,
- Figur 2:: die Vorrichtung gemäß Figur 1 mit abgewickeltem Druckschlauch,
- Figur 3:: eine Schnittdarstellung eines Druckschlauchs, wie er auch auf die erfindungsgemäße Vorrichtung aufwickelbar ist,

- Figur 4:: eine schematische Darstellung einer abgewandelten Ausführungsvariante der Erfindung,
- Figur 5:: eine weitere schematisch abgewandelte Ausführungsform der Erfindung und
- Figur 6:: eine weitere alternative Ausführungsform der erfindungsgemäßen Vorrichtung.

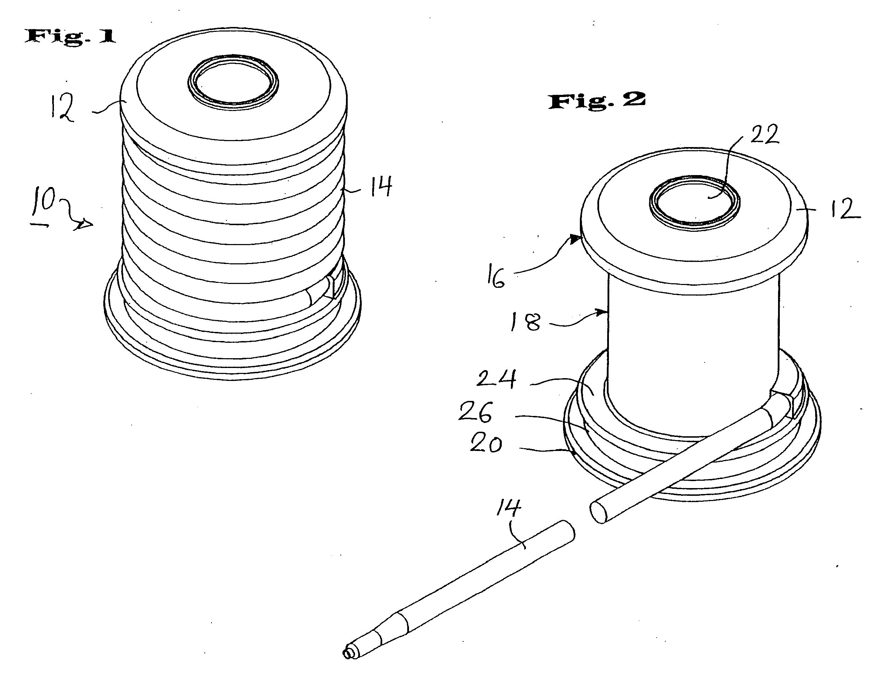

In der Ausführungsform der Erfindung gemäß Figur 1 besteht eine Vorrichtung 10 zum Abdichten aufblasbarer Gegenstände, insbesondere Reifen, aus einer Gasdruckquelle 12 und einem auf den Mantel der Gasdruckquelle 12 aufgewickelten Druckschlauch 14.

Wie insbesondere aus der Figur 2 zu sehen ist, besteht das Gehäuse 16 der Gasdruckquelle 12 aus einem im wesentlichen zylindrischen Körper, der auf seiner Mantelfläche eine breite Ausnehmung 18 aufweist, die zur Aufnahme des spiralförmig aufgewickelten Druckschlauchs 14 dient. In Figur 1 ist der Druckschlauch 14 in aufgewickeltem Zustand und in Figur 2 im abgewickelten Zustand gezeigt.

Die Unterseite des Gehäuses 16 ist als Standfuß 20 ausgebildet. Die Oberseite des Gehäuses 16 weist einen Gasdruckmesser 22 auf, über den der Druck des hier nicht näher dargestellten aufblasbaren Gegenstands, beispielsweise des Reifens, mit dem die Gasdruckquelle über den Druckschlauch 14 verbindbar ist, angezeigt wird.

Durch eine Zwischenwand 24 abgetrennt ist neben der Ausnehmung 18 eine schmalere parallel angeordnete Ausnehmung 26 vorgesehen, in der ein hier nicht näher dargestelltes Elektroverbindungskabel aufwickelbar ist.

Prinzipiell ist die Druckquelle in bekannter Art und Weise aufgebaut. Diesbezüglich kann beispielsweise auf die EP 1 121 324 B1 verwiesen werden.

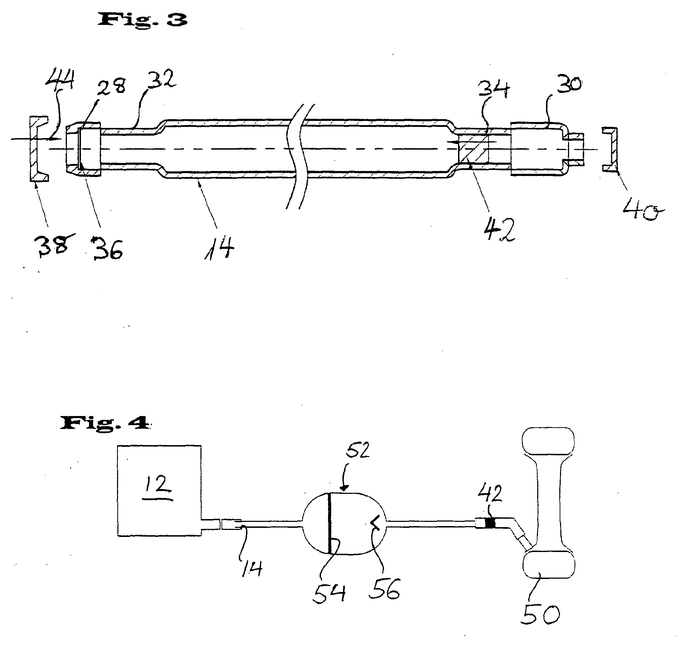

Die Figur 3 zeigt den Druckschlauch 14 in Schnittdarstellung. Der Druckschlauch weist an seinem Ende, das mit der Gasdruckquelle 12 verbindbar ist, ein Anschlussstück 28 auf. Am gegenüberliegenden Ende, das mit dem aufblasbaren Gegenstand verbindbar ist, ist ein Anschlussstück 30 angeordnet. Gegenüber den beiden Endbereichen 32 und 34 ist der Druckschlauch 14 über seine Hauptlänge im Querschnitt erweitert, wie aus der Figur 3 schematisch zu ersehen ist. Der Druckschlauch 14 ist mit einem Abdichtmittel gefüllt, das eine an sich aus dem Stand der Technik bekannte Zusammensetzung aufweisen kann. Diesbezüglich wird auf das beispielsweise in der DE 196 52 548 A1 genannte Abdichtmittel verwiesen.

Im Bereich des Anschlussstücks 28 ist eine Verschlussmembran 36 angeordnet, die bei Gebrauch der Abdichtvorrichtung geöffnet werden kann.

Die Anschlussstücke 28 und 30 sind mittels Verschlusskappen 38 und 40 verschließbar.

Im Endbereich 34 des Druckschlauchs 14 ist ein Rückschlagventil 42 angeordnet. Mit dem Pfeil 44 ist die Befüllrichtung gezeigt, in welcher das Abdichtmittel einfüllbar ist. In dieser Richtung wird auch die Druckluft eingeleitet, um das Abdichtmittel in den aufblasbaren Gegenstand einzufüllen.

Wie in der Figur 2 gezeigt, ist der Druckschlauch 14 im hier dargestellten Ausführungsbeispiel unmittelbar mit der Gasdruckquelle 12 verbunden. In dieser Ausführungsvariante ist keine Abdeckkappe 38 vorzusehen.

Die Gasdruckquelle 12 ist in diesem Ausführungsbeispiel zur Bereitstellung von Druckluft ausgebildet und kann beispielsweise als Kleinkompressor, Kfz-Zentralkompressor, stationäre Druckluftversorgungsanlage oder tragbarerer Druckspeicherbehälter, wie sie beispielsweise an Tankstellen zur Verfügung stehen, oder als Hand- oder Fußluftpumpe ausgebildet sein. Der maximal von der Gasdruckquelle 12 zu erbringende Druck braucht nicht größer sein als der für zumindest einen Notbetrieb eines Reifens erforderliche Druck.

In Figur 4 wird eine alternative Ausführungsvariante der vorliegenden Erfindung gezeigt, wobei hier mit 12 die Gasdruckquelle schematisch bezeichnet ist, an welcher der Druckschlauch 14 angeschlossen ist. Der Druckschlauch 14 ist wiederum mit einem Reifen 50 verbunden, der repariert werden soll. In seinem mittleren Bereich weist der Druckschlauch 14 einen Bereich 52 erweiterten Durchmessers auf, in dem ein entsprechend größeres Volumen an Abdichtmittel aufnehmbar ist. Mit 54 ist ein Membranschieber bezeichnet, der das Ausschieben des Abdichtmittels erleichtert. Der Schieber 54 ist durch die aus der Gasdruckquelle austretenden Druckluft verschiebbar und drückt somit das Abdichtmittel in Richtung des Reifen 50. Mit 56 ist ein Messer bezeichnet, das beim Erreichen der Endstellung des Membranschiebers diesen aufschneidet, so daß die Druckluft aus der Gasdruckquelle 12 durch den Membranschieber 54 hindurchtreten kann und in das weitere Druckschlauchsystem 14 eindringen kann.

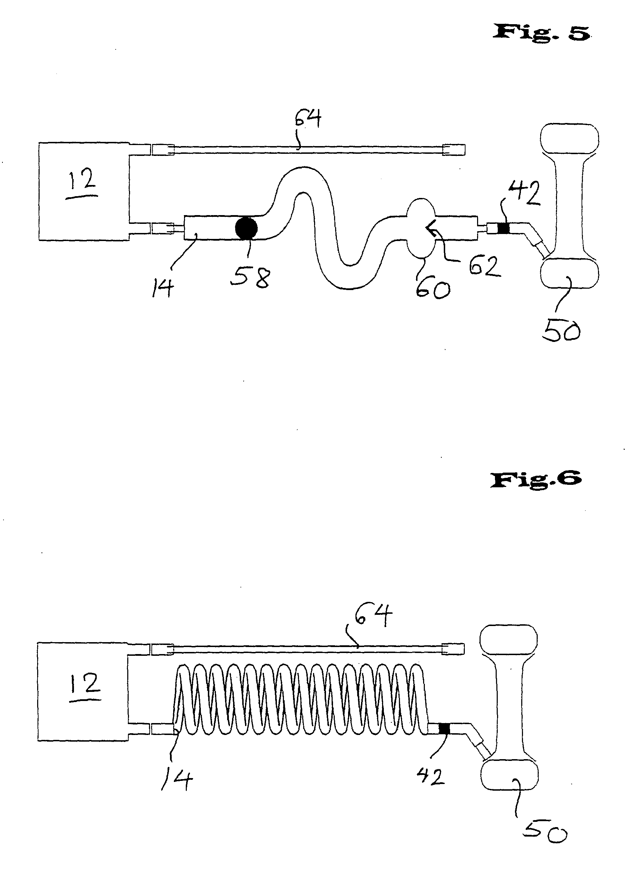

Eine abgewandelte Ausführungsvariante der Erfindung ergibt sich aus der Figur 5, in welcher der Druckschlauch einen Kugelschieber 58 aufweist, der ähnlich wie der Membranschieber gemäß der Figur 4 zum Ausdrücken der Abdichtmasse aus dem Druckschlauch 14 dient. Im Endbereich des Schlauches ist eine entsprechende Vertiefung 60 vorgesehen und es ist zusätzlich ein Begrenzungselement 62 vorgesehen. Bei Erreichen der Endstellung wird der Kugelschieber 58 durch das Begrenzungselement 62 aufgehalten, so daß er in die Ausnehmung 60 fällt und damit das Volumen des Druckschlauchs 14 freigibt. An der Druckluftquelle 12 ist im hier dargestellten Ausführungsbeispiel noch ein zusätzlicher Druckschlauch 64 angeschlossen, der kein Abdichtmittel enthält, also nur zum Druckbeaufschlagen eines Reifens 50 mittels der Gasdruckquelle 12 dient.

Eine weitere Ausgestaltung der Erfindung ist in Figur 6 gezeigt, in welcher der Druckschlauch 14 spiralförmig gewunden ist. Hierdurch wird sichergestellt, dass sich die Abdichtmasse jeweils in die unteren Windungen der Spirale sammeln und von der Druckluft aus der Druckquelle 12 erfaßt werden können.

## Patentansprüche

1. Vorrichtung zum Abdichten aufblasbarer Gegenstände, insbesondere Reifen, mit einer Gasdruckquelle, einem Druckschlauch zum Verbinden der Gasdruckquelle mit dem aufblasbaren Gegenstand und einem in einer Entnahmeeinheit enthaltenen Abdichtmittel,
**dadurch gekennzeichnet,**
**dass** der Druckschlauch gleichzeitig die das Abdichtmittel enthaltene Entnahmeeinheit bildet.

2. Vorrichtung nach Anspruch 1, **dadurch gekennzeichnet, dass** der Druckschlauch über Anschlussstücke mit der Gasdruckquelle und dem aufblasbaren Gegenstand verbindbar ist.

3. Vorrichtung nach Anspruch 1 oder 2, **dadurch gekennzeichnet, dass** der Druckschlauch vor dem Anschlussstück, das mit dem aufblasbaren Gegenstand verbindbar, ist ein Rückschlagventil aufweist.

4. Vorrichtung nach einem der Ansprüche 1 bis 3, **dadurch gekennzeichnet, dass** in den Anschlussstücken jeweils den Schlauch verschließende Verschlußmembranen enthalten sind.

5. Vorrichtung nach einem der Ansprüche 1 bis 4, **dadurch gekennzeichnet, dass** auf die Anschlussstücke des Druckschlauchs jeweils Verschlusskappen aufsetzbar sind.

6. Vorrichtung nach einem der Ansprüche 1 bis 5, **dadurch gekennzeichnet, dass** der Druckschlauch in dem Bereich, in dem er das Abdichtmittel aufnimmt, einen erweiterten Querschnitt aufweist.

7. Vorrichtung nach einem der Ansprüche 1 bis 6, **dadurch gekennzeichnet, dass** die Gasdruckquelle ein Gehäuse aufweist, das an seiner Mantelfläche eine Ausnehmung zur Aufnahme des auf das Gehäuse aufwickelbaren Druckschlauches ausnimmt.

8. Vorrichtung nach Anspruch 7, **dadurch gekennzeichnet, dass** eine Seite des Gehäuses der Gasdruckquelle als Standfuß ausgebildet ist, während auf der gegenüberliegenden Seite ein Gasdruckanzeiger angeordnet ist.

9. Vorrichtung nach einem der Ansprüche 7 oder 8, **dadurch gekennzeichnet, dass** der Druckschlauch im aufgewickelten Zustand über das entsprechende Anschlussstück bereits mit der Gasdruckquelle verbunden ist.

10. Vorrichtung nach einem der Ansprüche 7 bis 9, **dadurch gekennzeichnet, dass** abgetrennt von der Ausnehmung zur Aufnahme des Druckschlauchs am Gehäusemantel eine Ausnehmung zur Aufnahme eines aufwickelbaren elektrischen Verbindungskabels ausgenommen ist.

11. Vorrichtung nach einem der Ansprüche 1 bis 10, **dadurch gekennzeichnet, daß** der Druckschlauch in seinem mittleren Bereich einen vergleichsweise größeren Durchmesser aufweist und daß in diesem Bereich ein Membranschieber verschieblich angeordnet ist.

12. Vorrichtung nach Anspruch 11, **dadurch gekennzeichnet, daß** im Endbereich des erweiterten Durchmesserbereichs des Druckschlauches eine Einrichtung zum zerstören der Membran angeordnet ist.

13. Vorrichtung nach einem der Ansprüche 1 bis 10, **dadurch gekennzeichnet, daß** im Druckschlauch ein Kugelschieber beweglich angeordnet ist und daß am Ende des Schlauchs eine Aufnahmeausnehmung zur Aufnahme des Kugelschiebers ausgebildet ist.

14. Vorrichtung nach einem der Ansprüche 1 bis 10, **dadurch gekennzeichnet, daß** der Druckschlauch spiralförmig gewunden ist.
